# FASCICULE DE BREVET EUROPEEN

(11) **EP 3 803 315 B1**
(45) Date de publication et mention de la délivrance du brevet: **18.02.2026**
(21) Numéro de dépôt: 19731798.5
(22) Date de dépôt: 04.06.2019
(51) Int. Cl.: G01M 5/00, B29C 70/06, B29C 70/30

(54) **PROCÉDÉ D'AVERTISSEMENT D'UN RISQUE DE RUPTURE OU DE DÉFORMATION D'UNE PIÈCE EN MATÉRIAU COMPOSITE, ET PIÈCE OBTENUE**
VERFAHREN ZUR WARNNUNG VOR DER BRUCH- ODER VERFORMUNGSGEFAHR EINES TEILS AUS EINEM VERBUNDWERKSTOFF UND HERGESTELLTES TEIL
METHOD FOR WARNING OF RISK OF RUPTURE OR DEFORMATION OF A PART MADE OF A COMPOSITE MATERIAL, AND PART PRODUCED

(30) Priorité: 04.06.2018 FR 1854834; 04.06.2018 FR 1854837
(43) Date de publication de la demande: 14.04.2021
(73) Titulaire: Conseil et Technique, 31570 Sainte Foy d'Aigrefeuille (FR)
(72) Inventeur: VALEMBOIS, Guy, 31650 Lauzerville (FR); FLORENTZ, Bertrand, 45200 Paucourt (FR); FISCHER, Nicolas-Jean, 91120 Palaiseau (FR)
(74) Mandataire: Gevers & Orès
(86) Numéro de dépôt international: PCT/IB2019/054605
(87) Numéro de publication internationale: WO 2019/234601

(56) Documents cités:
- WO-A1-2004/035913
- WO-A1-2007/003883
- WO-A2-2009/044191
- DE-A1- 102007 032 351
- DE-A1- 102008 058 882
- FR-A1- 2 865 539
- FR-A1- 2 980 574
- US-A1- 2007 037 462
- US-A1- 2011 142 091

## Description

La présente invention concerne le domaine des pièces de structure en matériau composite, comprenant une matrice thermoplastique ou thermodurcissable renforcée de fibres, telle que des ferrures par exemple.

Elle a pour objet un procédé d'avertissement d'un risque de rupture ou de déformation d'une telle pièce de structure en fonction de son utilisation, ainsi qu'une pièce en matériau composite comportant un système d'avertissement d'un risque de rupture ou de déformation.

On notera que par fibre on entend toutes les formes sous lesquelles peuvent être présentées les fibres de renfort, et notamment, mais non limitativement, des mèches, rubans ou cordons de fibres de renfort.

Les pièces composites utilisées comme pièces de structure présentent l'inconvénient d'un risque de rupture qu'il n'est pas possible de prévenir car elles se déforment très peu avant de casser, ce qui impose aujourd'hui un surdimensionnement conséquent de ces pièces pour qu'elles ne cassent qu'au-delà d'un effort ultime, bien supérieur aux efforts maximums de fonctionnement. De plus, pouvant être occasionnellement endommagées sans que cela soit visible, elles sont également surdimensionnées pour résister aux chargements de fonctionnement, ultimes et fatigues, même après endommagement.

Il serait toutefois préférable en termes de poids et économiquement, de rendre plus lisible l'endommagement de ces pièces composites, en étant en capacité de détecter préventivement un risque de rupture.

On connaît aussi, par les documents US 2007/037462, FR 2 865 539, FR 2 980 574, DE 10 2007 032351, WO 2007/003883, WO 2009/044191, ou encore JP 3 344805, EP 2 500 706 et EP 2 112 374, des objets qui incorporent des éléments présentant une fragilité calibrée associés à des moyens capteurs, avec pour inconvénients qu'ils ne font pas partie des éléments structuraux, au mieux ils relient des éléments structuraux, en sorte qu'ils peuvent céder pour des raisons autres qu'une sollicitation de la résistance de l'objet, un choc par exemple.

La présente invention a donc pour objet de proposer un procédé de fabrication d'une pièce structurale composite, ainsi que de la pièce structurale composite obtenue, permettant de prévenir un risque de rupture en intégrant des moyens d'avertissement d'un risque dans les éléments qui créent la résistance à une sollicitation.

Selon l'invention, le procédé d'avertissement d'un risque de rupture ou de déformation d'une pièce structurale en matériau composite lorsqu'elle est soumise à un effort, selon l'invention, où ladite pièce est constituée d'une matrice thermoplastique ou thermodurcissable renforcée de fibres, se caractérise en ce qu'il consiste à :
- arranger lesdites fibres en une structure en treillis obtenue par bobinage des fibres, imprégnées ou non de résine, sur des plots ou analogues, en sorte de tendre les fibres entre des plots pour former des barres se rejoignant ou se croisant en des nœuds, où lesdites barres sont orientées de façon à être sollicitées en traction ou compression,
- à configurer au moins une barre dudit treillis et/ou à intégrer à ladite pièce au moins une barre supplémentaire créée à partir de nœuds supplémentaires et/ou d'un ou plusieurs nœuds dudit treillis, dont l'emplacement et la résistance à la rupture sont déterminés en sorte d'une part qu'à son emplacement sa rupture ne soit pas préjudiciable à l'intégrité en utilisation dudit treillis et donc de ladite pièce, et d'autre part, que ladite résistance à la rupture soit calibrée pour être d'une valeur supérieure à celle permettant de supporter une sollicitation optimale en utilisation de ladite pièce, tout en étant inférieure à celle de sollicitation maximale de ladite pièce,
- à associer à ladite au moins une barre, intérieurement à ladite pièce, un moyen capteur conçu apte à détecter sa rupture,
- à associer audit moyen capteur, un moyen d'émission, extérieurement à ladite pièce, d'un signal relatif à la rupture.

Ainsi, la présente invention, utilise les propriétés d'une structure treillis pour créer à l'intérieur de celui-ci, un treillis secondaire, tendu entre les nœuds du treillis principal, et dont au moins l'une des barres est dédiée à la mesure.

Selon une caractéristique additionnelle du procédé selon l'invention, on calibre la résistance de la au moins une barre supplémentaire, en réduisant sa section par rapport à celle des autres barres, ou en utilisant un matériau moins résistant que celui utilisé pour les autres barres, ou en créant sur ladite barre un accident de forme apte à provoquer une sur-contrainte, ou en sous-dimensionnement un nœud supplémentaire.

Selon une autre caractéristique additionnelle du procédé selon l'invention, on incorpore à la structure treillis, associés à des éléments de ladite structure, des seconds moyens capteurs de détection de la rupture de l'un desdits éléments.

Sous l'effet d'une sollicitation importante, il est possible, en plus de la structure treillis secondaire dédiée à la détection, que la structure treillis principale soit également détériorée sans pour autant que cela soit détectable ou visible dans le comportement de la pièce composite ou de l'objet comportant ladite pièce. Aussi les seconds moyens capteurs sont destinés à donner l'alerte en vue d'une prise de décision rapide.

La présente invention a également pour objet une pièce structurale en matériau composite comportant un système d'avertissement d'un risque de rupture ou de déformation lorsqu'elle est soumise à un effort, ladite pièce en matériau composite étant constituée d'une matrice thermoplastique ou thermodurcissable renforcée de fibres, qui se caractérise en ce que lesdites fibres sont arrangées en une structure en treillis obtenue par bobinage des fibres, imprégnées ou non de résine, sur des plots ou analogues, en sorte de faire cheminer les fibres entre lesdits plots pour former des barres se rejoignant ou se croisant en des nœuds, lesdites barres étant orientées de façon à être sollicitées en traction ou compression, ladite pièce composite comportant en outre, au moins une barre créée à partir de nœuds supplémentaires et/ou d'un ou plusieurs nœuds dudit treillis, dont l'emplacement ainsi que la résistance à la rupture sont prédéterminés, en sorte d'une part que sa résistance à la rupture soit calibrée pour être inférieure à celle que doit avoir ladite pièce et supérieure à celle permettant de supporter une sollicitation optimale en utilisation de ladite pièce, et d'autre part que sa rupture ne soit pas préjudiciable à l'intégrité en fonctionnement de ladite pièce ; en ce que ladite au moins une barre, est associée à un moyen capteur conçu apte à détecter sa rupture ; et en ce que ledit moyen capteur est associé à un moyen d'émission d'un signal relatif à la rupture.

La rupture de la au moins une barre dédiée à la mesure consiste ainsi le premier dommage constatable sur la pièce, celle-ci conservant son intégrité en fonctionnement nominal.

Lors de la sollicitation de la pièce, la rupture constatée de la barre dédiée à la mesure est le signe d'une surcharge par rapport à une charge nominale. Le passage à ce seuil d'alerte pourra déclencher une action d'avertissement ou de maintenance.

Le moyen capteur peut se présenter sous différentes formes, et notamment, non limitativement :
- un conducteur électrique, ou une fibre optique, disposé dans la barre dédiée à la mesure, qui se brise simultanément avec cette barre,
- une jauge de déformation par allongement de la barre, constituée par exemple d'une bobine ou d'un conducteur, la variation de longueur dudit conducteur pendant la déformation impactant directement la résistance du conducteur,
- ou tout autre système permettant de mesurer une déformation ou une contrainte.

Il est à noter que l'inclusion dans la résine du treillis peut permettre de placer le capteur à proximité de la barre dédiée à la mesure, car la résine constituant la matrice ayant une rigidité négligeable devant celle du matériau composite constituant le treillis, la déformation locale à proximité de la barre dédiée à la mesure sera similaire dans la résine à celle de la barre.

Le moyen d'émission d'un signal peut être réalisé de différentes manières, notamment, non limitativement :
- par une liaison filaire au capteur, traversant la matrice,
- par une liaison sans fil, au travers d'une électronique de communication directement noyée dans la matrice, ou imprimée sur la matrice,
- par un moyen de transmission optique, en utilisant une matrice transparente,
- ou en utilisant comme capteur une antenne RFID interrogeable à distance par une source active capable de détecter sa rupture ou déformation.

La présente invention a également pour objet une variante du procédé d'avertissement d'un risque de rupture ou de déformation d'une pièce structurale en matériau composite lorsqu'elle est soumise à un effort, ladite pièce étant constituée d'une matrice thermoplastique ou thermodurcissable renforcée de fibres, le procédé se caractérisant en ce qu'il consiste à :
- arranger lesdites fibres en une structure en treillis obtenue par bobinage des fibres, imprégnées ou non de résine, sur des plots ou analogues, en sorte de tendre les fibres entre lesdits plots pour former des barres se rejoignant en des nœuds, lesdites barres étant orientées de façon à être sollicitées en traction ou compression,
- concevoir au moins une partie de ladite pièce au travers d'au moins une barre dudit treillis et/ou d'au moins une barre supplémentaire créée à partir de nœuds supplémentaires et/ou d'un ou plusieurs nœuds dudit treillis, dont l'emplacement et la résistance à la rupture sont déterminés en sorte d'une part qu'à son emplacement, lorsque la pièce subit un effort atteignant ou dépassant l'effort nominal, elle subisse un effort provoquant sa rupture, et que sa rupture ne soit pas préjudiciable à l'intégrité en utilisation dudit treillis et donc de ladite pièce, d'autre part que ladite résistance à la rupture soit calibrée pour être d'une valeur supérieure à celle permettant de supporter une sollicitation optimale en utilisation de ladite pièce, tout en étant inférieure à celle de sollicitation maximale de ladite pièce,
et en ce que ladite partie de ladite pièce consiste en une portion identifiable extérieurement, et qui est conçue apte à subir une déformation lors de la rupture de ladite au moins une barre.

Ainsi, selon cette variante, on crée une pièce composite de type à structure treillis, destinée à être soumise à des efforts, et qui comporte une partie, également soumise auxdits efforts, dont la structure treillis est d'une résistance à la rupture moindre que celle du reste du treillis, mais supérieure à la résistance souhaitée de la pièce composite et inférieure à la résistance maximale de cette dernière. De plus, cette partie de la pièce composite est identifiable, et la rupture de sa structure en génère une modification visible extérieurement, telle qu'une déformation.

La déformation de la partie comprenant la au moins une barre dédiée à la mesure consiste ainsi le premier dommage constatable sur la pièce, celle-ci conservant son intégrité en fonctionnement nominal.

Il est donc possible de détecter avant un risque de rupture de la pièce composite, que celle-ci a été soumise à un effort supérieur à l'effort nominal.

Lors de la sollicitation de la pièce, la rupture constatée de la barre dédiée à la mesure est le signe d'une surcharge par rapport à une charge nominale. Le passage à ce seuil d'alerte pourra déclencher une action de prévention ou de maintenance.

La présente invention a également pour objet une pièce structurale en matériau composite comportant un moyen d'avertissement d'un risque de rupture ou de déformation lorsqu'elle est soumise à un effort, ladite pièce en matériau composite étant constituée d'une matrice thermoplastique ou thermodurcissable renforcée de fibres, qui se caractérise en ce que lesdites fibres sont arrangées en une structure en treillis obtenue par bobinage de fibres, imprégnées ou non de résine, sur des plots ou analogues, en sorte de tendre les fibres entre lesdits plots pour former des barres se rejoignant en des nœuds, lesdites barres étant orientées de façon à être sollicitées en traction ou compression,
en ce que ladite pièce comporte au moins une partie qui incorpore au moins une barre dudit treillis et/ou au moins une barre supplémentaire créée à partir de nœuds supplémentaires et/ou d'un ou plusieurs nœuds dudit treillis, dite barre de mesure, dont l'emplacement et la résistance à la rupture sont déterminés en sorte d'une part qu'à son emplacement, lorsque la pièce subit un effort atteignant ou dépassant l'effort nominal, elle subisse un effort provoquant sa rupture, et que sa rupture ne soit pas préjudiciable à l'intégrité en utilisation dudit treillis et donc de ladite pièce, d'autre part que ladite résistance à la rupture soit calibrée pour être d'une valeur supérieure à celle permettant de supporter une sollicitation optimale en utilisation de ladite pièce, tout en étant inférieure à celle de sollicitation maximale de ladite pièce,
et, en ce que ladite partie consiste en une portion identifiable extérieurement, et qui est conçue apte à subir une déformation lors de la rupture de ladite au moins une barre.

La moindre résistance à la rupture de la barre dédiée à la mesure peut être obtenue de différentes manières telles que, non limitativement, une section réduite par rapport à celles des autres barres du treillis, une zone de fragilisation, donner à cette barre une forme initiale pour réduire sa tenue au flambage en faisant passer l'enroulement sur un point de passage particulier par exemple, intégrer à cette barre une bobine intermédiaire dont la résistance est limitée en sorte qu'elle se rompe au-delà d'un certain effort exercé sur la barre.

Selon un mode de réalisation particulier, la barre de mesure comporte des fibres tendues et des fibres moins tendues, ces dernière étant aptes à autoriser un débattement augmenté de la pièce après rupture desdites fibres tendues.

Selon un mode de réalisation particulier de la pièce en matériau composite selon l'invention, la partie de ladite pièce destinée à l'identification de la rupture, comporte une structure primaire de treillis réalisée à partir d'une fibre de renforcement présentant un haut module et un faible taux d'allongement à rupture, ladite structure primaire étant associée à une structure secondaire, concourante ou non avec ladite structure primaire et réalisée à partir de fibres de renforcement présentant un module plus faible, un allongement à rupture plus élevé et/ou une contrainte à rupture plus élevée que les fibres de ladite structure primaire.

La rupture de la structure primaire à un effort défini par le dimensionnement de la pièce entraîne un transfert du chemin d'effort vers la structure secondaire. Ce changement de chemin d'effort se traduit par une modification de la raideur globale, un allongement détectable et/ou des fissures visibles permettant une détection du dommage subit par la pièce.

Avantageusement, la structure secondaire pourra supporter une charge finale avant rupture plus importante que la structure primaire, de manière à assurer le bon fonctionnement de la pièce malgré le dommage subi.

Ainsi par exemple, dans une structure treillis réalisée à partir de fibres de carbone HM (haut module), la ou les barres dites de mesure sont doublées de fibres de carbone (HR) (haute résistance), en sorte d'obtenir une baisse de la raideur après la rupture des fibres HM, l'effort maximum final étant plus élevé que l'effort de première rupture, en utilisant des fibres HR présentant un allongement à rupture et des admissibles plus élevés que les fibres HM.

On notera que le doublage peut également être réalisé avec des fibres de verre de type S.

Les avantages et les caractéristiques des procédés et des pièces en matériau composite qui en sont issue selon l'invention, ressortiront plus clairement de la description qui suit et qui se rapporte au dessin annexé, lequel en représente des modes de réalisation non limitatifs.

Dans le dessin annexé :
- la figure 1 représente une vue schématique en élévation d'une pièce en matériau composite relative au domaine de l'invention.
- la figure 2 représente la même pièce en matériau composite équipée d'un système d'avertissement d'un risque de rupture ou de déformation selon l'invention.
- la figure 3 représente la même pièce en matériau composite équipée d'un autre système d'avertissement d'un risque de rupture ou de déformation selon l'invention.
- la figure 4 représente une vue schématique en élévation d'une pièce en matériau composite relative au domaine de l'invention, équipée d'un moyen d'avertissement d'un risque de rupture ou de déformation selon l'invention.
- la figure 5 représente la même pièce en matériau composite équipée d'une variante du moyen d'avertissement d'un risque de rupture ou de déformation selon l'invention.

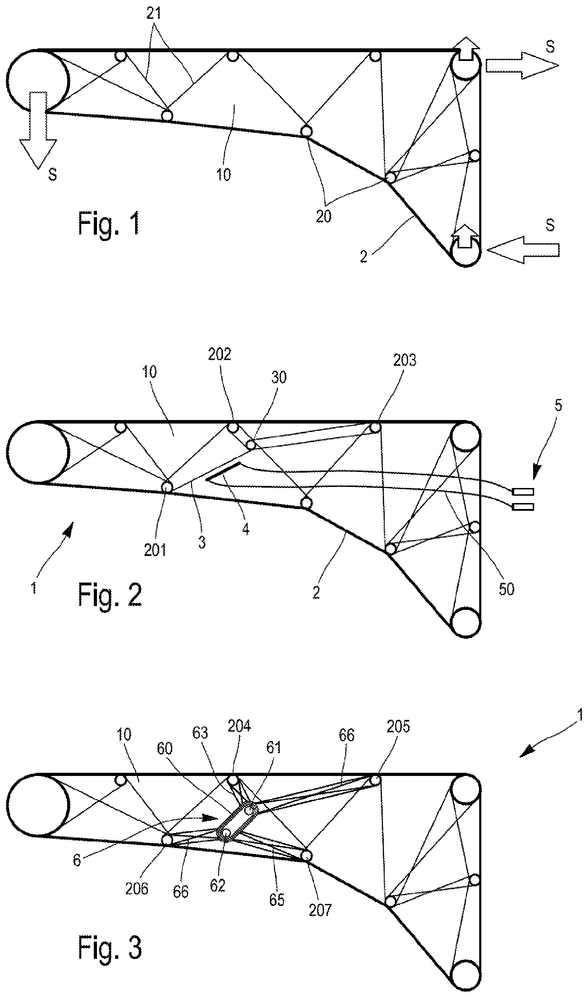

En référence à la figure 1, on peut voir une pièce 1 en matériau composite selon l'invention. Cette pièce composite 1 utilisée pour illustrer non limitativement la présente invention, consiste en une potence, propre à supporter des sollicitations mécaniques S lors de son utilisation.

La pièce composite 1 comprend une matrice thermoplastique ou thermodurcissable 10 renforcée de fibres qui sont arrangées en une structure en treillis 2 constituée de l'enroulement filamentaire, selon un parcours judicieusement choisi autour de bobines ou poulies pour former les nœuds 20 du treillis 2, tandis que les parties rectilignes s'étendant entre les nœuds 20 constituent des barres 21. Les fibres peuvent être préalablement enduites d'une résine thermoplastique ou thermodurcissable.

La préforme constituée du treillis 2 est ensuite intégrée à une matrice 10 pour bloquer les déformations transverses des fibres, soit par trempage dans un bain de matériau constituant la matrice, à une température permettant de présenter une viscosité suffisante pour couvrir le treillis de fibres 2, soit par moulage dans un moule, le volume de comblement de la pièce étant injecté en complément du treillis 2 préalablement disposé dans le moule.

En référence à la figure 2, on peut voir que, selon l'invention, le treillis 2 comporte une barre supplémentaire 3, obtenue par bobinage entre un nœud 201 du treillis 2 et un nœud supplémentaire 30, lui-même issu d'un bobinage avec deux nœuds 202 et 203 du treillis 2.

La barre supplémentaire 3 ne participe pas à la résistance nominale de la pièce composite 1, par contre elle est sollicitée en traction ou en compression lorsque la pièce composite 1 est sollicitée.

La barre supplémentaire 3 est configurée, pour offrir une résistance moindre que les autres barres 21, au travers, non limitativement, d'une section moindre, ou de l'utilisation d'un matériau moins performant, soit de la présence, à un endroit quelconque, ou d'un accident de forme provoquant une sur-contrainte, ou un sous dimensionnement du nœud 30, ou bien une combinaison de plusieurs de ces caractéristiques.

Toujours selon l'invention, à la barre supplémentaire 3 est associé un moyen capteur 4, destiné à être intégré à la matrice 10, et apte à mesurer une déformation ou une rupture de la barre supplémentaire 3. Dans le mode de réalisation représenté, le moyen capteur 4 est lié à des moyens 5 d'émission d'un signal disposés extérieurement à la pièce 1, et connecté au moyen capteur 4 par une liaison filaire 50.

Le moyen capteur 4 peut détecter une déformation ou une rupture de la barre supplémentaire 3, et transmettre cette information aux moyens 5 d'émission d'un signal.

En référence maintenant à la figure 3, on peut voir un mode de réalisation particulier du système d'avertissement selon l'invention.

Dans ce mode de réalisation une barre supplémentaire 6 dédiée à l'avertissement est réalisée par enroulement d'un conducteur filaire 60 autour de deux nœuds supplémentaires 61 et 62, chacun d'eux venant de la création de deux barres supplémentaires, respectivement 63 et 64, et 65 et 66, par des enroulements avec des nœuds du treillis 2, respectivement 204 et 205, et 206 et 207.

Les barres supplémentaires 6, 63, 64, 65 et 66, ainsi que les nœuds supplémentaires 61 et 62, forment un treillis secondaire tendu intérieurement au treillis 2 entre les nœuds 204, 205, 206 et 207, et dont la barre 6 constitue une jauge de déformation soumise aux sollicitations.

On comprendra que la variation de longueur de la barre 6 et donc du conducteur 60 impacte directement la résistance du conducteur.

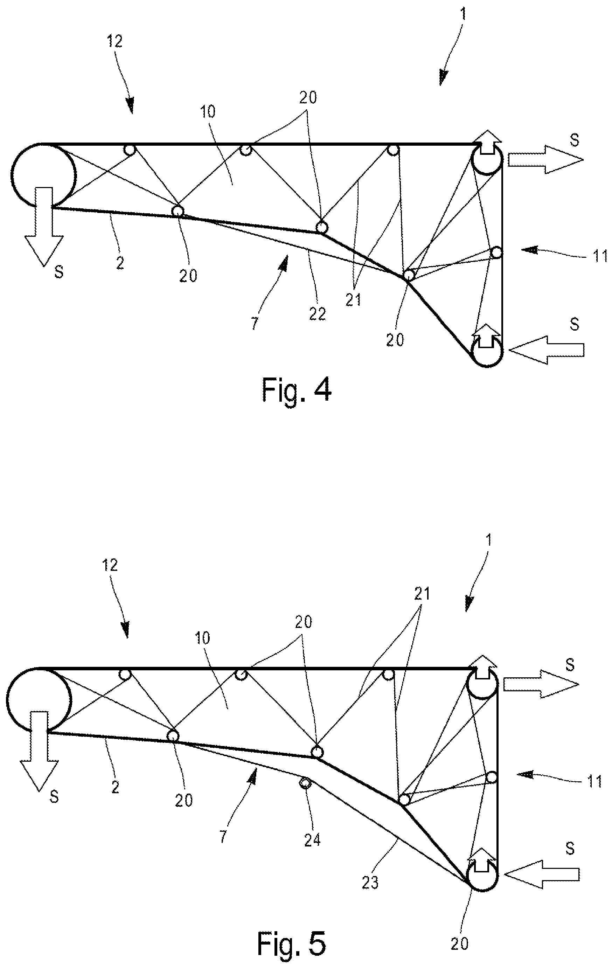

En référence maintenant à la figure 4, on peut voir la pièce 1 en matériau composite selon l'invention, et qui comprend un élément vertical 11 et un élément horizontal 12.

Selon cette variante de l'invention, la pièce composite 1 comporte une partie 7, identifiable extérieurement, comprenant une barre 22 du treillis 2, s'arcboutant comme une étai entre un nœud 20 de l'élément vertical 11 et un nœud 20 de l'élément horizontal 12.

La barre 22, dite barre de mesure, est positionnée pour ne pas participer à la résistance de la pièce 1 lorsque celle-ci est soumise à un effort, en sorte qu'en cas de rupture, l'intégrité de la pièce 1 soit intacte. Elle est configurée pour présenter une résistance à la rupture d'une valeur supérieure à celle permettant de supporter une sollicitation optimale en utilisation de la pièce 1, tout en étant inférieure à celle de sollicitation maximale de cette pièce 1.

Ainsi, la rupture de la barre 22, amenant à la déformation ou la rupture de la partie 7 de la pièce 1, visible extérieurement, permet de détecter que la pièce 1 a été ou est soumise à un effort supérieur à celui nominal requis.

En référence à la figure 5, on peut voir dans une variante, que la partie 7 de la pièce 1 est parcourue par une portion du treillis 2, comprenant une barre 23 s'étendant entre un nœud 20 de l'élément vertical 11 et un nœud 20 de l'élément horizontal 12 et présentant dans une portion médiane, un enroulement sur une bobine 24, dont la résistance à l'écrasement, sous l'effet d'une traction, est calibrée pour rompre lorsque la pièce 1 est soumise à un effort supérieur à l'effort nominal requis.

## Revendications

1. Procédé d'avertissement d'un risque de rupture ou de déformation d'une pièce (1) structurale en matériau composite lorsqu'elle est soumise à un effort, où ladite pièce est constituée d'une matrice thermoplastique ou thermodurcissable (10) renforcée de fibres, **caractérisé en ce qu'**il consiste à :
- arranger lesdites fibres en une structure en treillis (2) obtenue par bobinage des fibres, imprégnées ou non de résine, sur des plots ou analogues, en sorte de tendre les fibres entre des plots pour former des barres (21) se rejoignant ou se croisant en des nœuds (20), où lesdites barres (21) sont orientées de façon à être sollicitées en traction ou compression,
- configurer au moins une barre (21) dudit treillis et/ou à intégrer à ladite pièce au moins une barre supplémentaire (3) créée à partir de nœuds supplémentaires (30) et/ou d'un ou plusieurs nœuds (201, 202, 203) dudit treillis (2), dont l'emplacement et la résistance à la rupture sont déterminés en sorte d'une part qu'à son emplacement sa rupture ne soit pas préjudiciable à l'intégrité en utilisation dudit treillis (2) et donc de ladite pièce, et d'autre part que ladite résistance à la rupture soit calibrée pour être d'une valeur supérieure à celle permettant de supporter une sollicitation optimale en utilisation de ladite pièce, tout en étant inférieure à celle de sollicitation maximale de ladite pièce,
- associer à ladite au moins une barre, intérieurement à ladite pièce, un moyen capteur (4) conçu apte à détecter sa rupture, et
- associer audit moyen capteur (4), un moyen (5) d'émission, extérieurement à ladite pièce, d'un signal relatif à la rupture.

2. Procédé selon la revendication 1, **caractérisé en ce qu'**on calibre la résistance de la au moins une barre supplémentaire, en réduisant sa section par rapport à celle des autres barres, ou en utilisant un matériau moins performant que celui utilisé pour les autres barres, ou en créant sur ladite barre un accident de forme apte à provoquer une sur-contrainte, ou en sous-dimensionnement un nœud supplémentaire.

3. Procédé selon la revendication 1 ou la revendication 2, **caractérisé en ce qu'**on incorpore à la structure treillis, associés à des éléments de ladite structure, des seconds moyens capteurs de détection de la rupture desdits éléments.

4. Pièce (1) structurale en matériau composite comportant un système d'avertissement d'un risque de rupture ou de déformation lorsqu'elle est soumise à un effort, ladite pièce en matériau composite étant constituée d'une matrice thermoplastique ou thermodurcissable (10) renforcée de fibres, **caractérisée en ce que** lesdites fibres sont arrangées en une structure en treillis (2) obtenue par bobinage des fibres, imprégnées ou non de résine, sur des plots ou analogues, en sorte de faire cheminer les fibres entre lesdits plots pour former des barres (21) se rejoignant ou se croisant en des nœuds (20), lesdites barres étant orientées de façon à être sollicitées en traction ou compression, ladite pièce composite comportant en outre, au moins une barre supplémentaire (3) créée à partir de nœuds supplémentaires (30) et/ou d'un ou plusieurs nœuds (201, 202, 203) dudit treillis, dont l'emplacement ainsi que la résistance à la rupture sont prédéterminés, en sorte d'une part que sa résistance à la rupture soit calibrée pour être inférieure à celle que doit avoir ladite pièce et supérieure à celle permettant de supporter une sollicitation optimale en utilisation de ladite pièce, et d'autre part que sa rupture ne soit pas préjudiciable à l'intégrité en fonctionnement de ladite pièce ; **en ce que** ladite au moins une barre, est associée à un moyen capteur (4) conçu apte à détecter sa rupture ; et **en ce que** ledit moyen capteur est associé à un moyen d'émission (5) d'un signal relatif à la rupture.

5. Pièce en matériau composite selon la revendication 4, **caractérisée en ce que** le moyen capteur se présente sous la forme d'un conducteur électrique, ou une fibre optique, disposé dans la au moins une barre supplémentaire, dédiée à la mesure, conçu apte à se briser simultanément avec ladite au moins une barre.

6. Pièce en matériau composite selon la revendication 4, **caractérisée en ce que** le moyen capteur se présente sous la forme d'une jauge de déformation par allongement de la barre, celle-ci étant constituée d'une bobine ou d'un conducteur électrique, dont la variation de longueur pendant la déformation impacte la résistance dudit conducteur.

7. Pièce en matériau composite selon l'une quelconque des revendications 4 à 6, **caractérisée en ce que** le moyen d'émission d'un signal consiste en une liaison filaire traversant la matrice.

8. Pièce en matériau composite selon l'une quelconque des revendications 4 à 6, **caractérisée en ce que** le moyen d'émission d'un signal consiste en une électronique de communication noyée dans la matrice.

9. Pièce en matériau composite selon l'une quelconque des revendications 4 à 6, **caractérisée en ce que** le moyen d'émission d'un signal consiste, alors que la matrice est transparente, en un moyen de transmission optique.

10. Pièce en matériau composite selon l'une quelconque des revendications 4 à 6, **caractérisée en ce que** le moyen de détection et d'émission est noyé ou imprimé sur la résine et est constitué par une antenne RF interrogeable à distance.

11. Procédé d'avertissement d'un risque de rupture ou de déformation d'une pièce structurale (1) en matériau composite lorsqu'elle est soumise à un effort, ladite pièce étant constituée d'une matrice thermoplastique ou thermodurcissable (10) renforcée de fibres, **caractérisé en ce qu'**il consiste à :
- arranger lesdites fibres en une structure en treillis (2) obtenue par bobinage des fibres, imprégnées ou non de résine, sur des plots ou analogues (20), en sorte de tendre les fibres entre lesdits plots pour former des barres (21) se rejoignant en des nœuds, lesdites barres (21) étant orientées de façon à être sollicitées en traction ou compression,
- concevoir au moins une partie (7) de ladite pièce au travers d'au moins une barre dudit treillis et/ou d'au moins une barre supplémentaire (22; 23) créée à partir de nœuds supplémentaires (24) et/ou d'un ou plusieurs nœuds dudit treillis, dont l'emplacement et la résistance à la rupture sont déterminés en sorte d'une part qu'à son emplacement, lorsque la pièce subit un effort atteignant ou dépassant l'effort nominal, elle subisse un effort provoquant sa rupture, et que sa rupture ne soit pas préjudiciable à l'intégrité en utilisation dudit treillis et donc de ladite pièce, d'autre part que ladite résistance à la rupture soit calibrée pour être d'une valeur supérieure à celle permettant de supporter une sollicitation optimale en utilisation de ladite pièce, tout en étant inférieure à celle de sollicitation maximale de ladite pièce,
et **en ce que** ladite partie (7) de ladite pièce (1) consiste en une portion identifiable extérieurement, et qui est conçue apte à subir une déformation lors de la rupture de ladite au moins une barre.

12. Pièce structurale en matériau composite comportant un moyen d'avertissement d'un risque de rupture ou de déformation lorsqu'elle est soumise à un effort, ladite pièce en matériau composite étant constituée d'une matrice thermoplastique ou thermodurcissable (10) renforcée de fibres, **caractérisée en ce que** lesdites fibres sont arrangées en une structure en treillis (2) obtenue par bobinage de fibres, imprégnées ou non de résine, sur des plots ou analogues (20), en sorte de tendre les fibres entre lesdits plots (20) pour former des barres se rejoignant en des nœuds, lesdites barres étant orientées de façon à être sollicitées en traction ou compression,
**en ce que** ladite pièce (1) comporte au moins une partie (7) qui incorpore au moins une barre dudit treillis (2) et/ou au moins une barre supplémentaire (22 ; 23) créée à partir de nœuds supplémentaires (24) et/ou d'un ou plusieurs nœuds (20) dudit treillis, dite barre de mesure, dont l'emplacement et la résistance à la rupture sont déterminés en sorte, d'une part, qu'à son emplacement, lorsque la pièce subit un effort atteignant ou dépassant l'effort nominal, elle subisse un effort provoquant sa rupture, et que sa rupture ne soit pas préjudiciable à l'intégrité en utilisation dudit treillis et donc de ladite pièce, d'autre part, que ladite résistance à la rupture soit calibrée pour être d'une valeur supérieure à celle permettant de supporter une sollicitation optimale en utilisation de ladite pièce, tout en étant inférieure à celle de sollicitation maximale de ladite pièce,
et, **en ce que** ladite partie (7) consiste en une portion identifiable extérieurement, et qui est conçue apte à subir une déformation lors de la rupture de ladite au moins une barre.

13. Pièce en matériau composite selon la revendication 12, **caractérisée en ce que** la barre de mesure (22 ; 23) présente une section réduite par rapport à celles des autres barres (20) de la structure treillis (2).

14. Pièce en matériau composite selon la revendication 12, **caractérisée en ce que** la barre de mesure (22 ; 23) présente une zone de fragilisation.

15. Pièce en matériau composite selon la revendication 14, **caractérisée en ce que** la zone de fragilisation consiste en un enroulement sur une bobine (24) dont la résistance est limitée.

16. Pièce en matériau composite selon la revendication 12, **caractérisée en ce que** la barre de mesure (22 ; 23) comporte des fibres tendues et des fibres moins tendues, ces dernière étant aptes à autoriser un débattement augmenté de la pièce après rupture desdites fibres tendues.

17. Pièce en matériau composite selon la revendication 12, **caractérisée en ce que** la partie de ladite pièce destinée à l'identification de la rupture, comporte une structure primaire de treillis réalisée à partir d'une fibre de renforcement présentant un haut module et un faible taux d'allongement à rupture, ladite structure primaire étant associée à une structure secondaire, concourante ou non avec ladite structure primaire et réalisée à partir de fibres de renforcement présentant un module plus faible, un allongement à rupture plus élevé et/ou une contrainte à rupture plus élevée que les fibres de ladite structure primaire.

## Patentansprüche

1. Verfahren zum Warnen vor einer Bruch- oder Verformungsgefahr eines Bauteils (1) aus Verbundwerkstoff, wenn dieses einer Belastung ausgesetzt ist, wobei das Teil aus einer faserverstärkten thermoplastischen oder duroplastischen Matrix (10) besteht, **dadurch gekennzeichnet, dass** es darin besteht:
- die Fasern in einer Gitterstruktur (2) anzuordnen, die erhalten wird durch Wickeln der mit Harz imprägnierten oder nicht imprägnierten Fasern auf Halter oder ähnliches so, dass die Fasern zwischen Haltern gespannt werden, um Stangen (21) zu bilden, die an Knoten (20) zusammenlaufen oder sich kreuzen, wobei die Stangen (21) so ausgerichtet sind, dass sie auf Zug oder Druck beansprucht werden,
- mindestens eine Stange (21) des Gitters zu konfigurieren und/oder mindestens eine zusätzliche Stange (3) in das Teil zu integrieren, welche auf Grundlage von zusätzlichen Knoten (30) und/oder eines oder mehrerer Knoten (201, 202, 203) des Gitters (2) erzeugt wird, deren Position und Bruchfestigkeit so bestimmt sind, dass einerseits ihr Bruch an ihrer Position die Integrität des Gitters (2) im Gebrauch und damit des Teils nicht beeinträchtigt, und andererseits die Bruchfestigkeit so kalibriert ist, dass sie einen höheren Wert aufweist als jenen, der es ermöglicht, einer optimalen Beanspruchung des Teils im Gebrauch standzuhalten, während er zugleich kleiner ist als jener einer maximalen Beanspruchung des Teils,
- der mindestens einen Stange innerhalb des Teils ein Sensormittel (4) zuzuordnen, das so konzipiert ist, dass es in der Lage ist, ihren Bruch zu erkennen, und
- dem Sensormittel (4) ein Mittel (5) zum Senden eines den Bruch betreffenden Signals außerhalb des Teils zuzuordnen.

2. Verfahren nach Anspruch 1, **dadurch gekennzeichnet, dass** die Festigkeit der mindestens einen zusätzlichen Stange kalibriert wird, indem ihr Querschnitt im Verhältnis zu dem der anderen Stangen verringert wird oder indem ein Material verwendet wird, das weniger leistungsstark ist als das für die anderen Stangen verwendete, oder indem an der Stange eine Formabweichung erzeugt wird, die in der Lage ist, eine Überbeanspruchung zu verursachen, oder durch Unterdimensionierung eines zusätzlichen Knotens.

3. Verfahren nach Anspruch 1 oder Anspruch 2, **dadurch gekennzeichnet, dass** in die Gitterstruktur, Elementen der Struktur zugeordnet, zweite Sensormittel zum Erkennen des Bruchs der Elemente integriert werden.

4. Bauteil (1) aus Verbundwerkstoff, das ein System umfasst zum Warnen vor einer Bruch- oder Verformungsgefahr, wenn es einer Belastung ausgesetzt ist, wobei das Teil aus Verbundwerkstoff aus einer faserverstärkten thermoplastischen oder duroplastischen Matrix (10) besteht, **dadurch gekennzeichnet, dass** die Fasern in einer Gitterstruktur (2) angeordnet sind, die erhalten wird durch Wickeln der mit Harz imprägnierten oder nicht imprägnierten Fasern auf Halter oder ähnliches so, dass die Fasern zwischen den Haltern geführt werden, um Stangen (21) zu bilden, die an Knoten (20) zusammenlaufen oder sich kreuzen,
wobei die Stangen so ausgerichtet sind, dass sie auf Zug oder Druck beansprucht werden, wobei das Verbundteil weiter mindestens eine zusätzliche Stange (3) umfasst, welche auf Grundlage von zusätzlichen Knoten (30) und/oder eines oder mehrerer Knoten (201, 202, 203) des Gitters erzeugt wird, deren Position sowie Bruchfestigkeit so vorbestimmt sind, dass einerseits ihre Bruchfestigkeit so kalibriert ist, dass sie kleiner ist als jene, die das Teil aufweisen muss, und größer als jene, die es ermöglicht, einer optimalen Beanspruchung des Teils im Gebrauch standzuhalten, und andererseits ihr Bruch die Integrität des Teils im Betrieb nicht beeinträchtigt; dass die mindestens eine Stange einem Sensormittel (4) zugeordnet ist, das so konzipiert ist, dass es in der Lage ist, ihren Bruch zu erkennen; und dass das Sensormittel einem Mittel zum Senden (5) eines Signals in Bezug auf den Bruch zugeordnet ist.

5. Teil aus Verbundwerkstoff nach Anspruch 4, **dadurch gekennzeichnet, dass** das Sensormittel in Form eines elektrischen Leiters oder einer optischen Faser vorliegt, der bzw. die in der mindestens einen zusätzlichen, für die Messung vorgesehenen Stange angeordnet und so konzipiert ist, dass er bzw. sie in der Lage ist, gleichzeitig mit der mindestens einen Stange zu brechen.

6. Teil aus Verbundwerkstoff nach Anspruch 4, **dadurch gekennzeichnet, dass** das Sensormittel in Form eines Verformungs-/Dehnungsmessstreifens für die Stange vorliegt, wobei dieser aus einer Spule oder einem elektrischen Leiter besteht, dessen Längenänderung während der Verformung sich auf den Widerstand des Leiters auswirkt.

7. Teil aus Verbundwerkstoff nach einem der Ansprüche 4 bis 6, **dadurch gekennzeichnet, dass** das Mittel zum Senden eines Signals aus einer Drahtverbindung besteht, die durch die Matrix verläuft.

8. Teil aus Verbundwerkstoff nach einem der Ansprüche 4 bis 6, **dadurch gekennzeichnet, dass** das Mittel zum Senden eines Signals aus einer Kommunikationselektronik besteht, die in die Matrix eingebettet ist.

9. Teil aus Verbundwerkstoff nach einem der Ansprüche 4 bis 6, **dadurch gekennzeichnet, dass** das Mittel zum Senden eines Signals, wenn die Matrix transparent ist, aus einem optischen Übertragungsmittel besteht.

10. Teil aus Verbundwerkstoff nach einem der Ansprüche 4 bis 6, **dadurch gekennzeichnet, dass** das Detektions- und Sendemittel in das Harz eingebettet oder aufgedruckt ist und aus einer fernabfragbaren HF-Antenne besteht.

11. Verfahren zum Warnen vor einer Bruch- oder Verformungsgefahr eines Bauteils (1) aus Verbundwerkstoff, wenn dieses einer Belastung ausgesetzt ist, wobei das Teil aus einer faserverstärkten thermoplastischen oder duroplastischen Matrix (10) besteht, **dadurch gekennzeichnet, dass** es darin besteht:
- die Fasern in einer Gitterstruktur (2) anzuordnen, die erhalten wird durch Wickeln der mit Harz imprägnierten oder nicht imprägnierten Fasern auf Halter oder ähnliches (20) so, dass die Fasern zwischen den Haltern gespannt werden, um Stangen (21) zu bilden, die an Knoten zusammenlaufen, wobei die Stangen (21) so ausgerichtet sind, dass sie auf Zug oder Druck beansprucht werden,
- mindestens ein Teilstück (7) des Teils durch mindestens eine Stange des Gitters und/oder mindestens eine zusätzliche Stange (22; 23) zu konzipieren, welche auf Grundlage von zusätzlichen Knoten (24) und/oder eines oder mehrerer Knoten des Gitters erzeugt wird, deren Position und Bruchfestigkeit so bestimmt sind, dass einerseits an ihrer Position, wenn das Teil einer Belastung ausgesetzt ist, die die Nennbelastung erreicht oder übersteigt, sie einer Belastung ausgesetzt ist, die zu ihrem Bruch führt, und ihr Bruch die Integrität des Gitters im Gebrauch und damit des Teils nicht beeinträchtigt, andererseits die Bruchfestigkeit so kalibriert ist, dass sie einen höheren Wert aufweist als jenen, der es ermöglicht, einer optimalen Beanspruchung des Teils im Gebrauch standzuhalten, während er zugleich kleiner ist als jener einer maximalen Beanspruchung des Teils,
und dass das Teilstück (7) des Teils (1) aus einem Abschnitt besteht, der von außen identifizierbar ist und der so konzipiert ist, dass er in der Lage ist, beim Bruch der mindestens einen Stange eine Verformung zu erfahren.

12. Bauteil aus Verbundwerkstoff, das ein Mittel umfasst zum Warnen vor einer Bruch- oder Verformungsgefahr, wenn es einer Belastung ausgesetzt ist, wobei das Teil aus Verbundwerkstoff aus einer faserverstärkten thermoplastischen oder duroplastischen Matrix (10) besteht, **dadurch gekennzeichnet, dass** die Fasern in einer Gitterstruktur (2) angeordnet sind, die erhalten wird durch Wickeln von mit Harz imprägnierten oder nicht imprägnierten Fasern auf Halter oder ähnliches (20) so, dass die Fasern zwischen den Haltern (20) gespannt werden, um Stangen zu bilden, die an Knoten zusammenlaufen, wobei die Stangen so ausgerichtet sind, dass sie auf Zug oder Druck beansprucht werden,
dass das Teil (1) mindestens ein Teilstück (7) umfasst, das mindestens eine Stange des Gitters (2) und/oder mindestens eine zusätzliche Stange (22; 23) beinhaltet, welche auf Grundlage von zusätzlichen Knoten (24) und/oder eines oder mehrerer Knoten (20) des Gitters erzeugt und als Messstange bezeichnet wird, deren Position und Bruchfestigkeit so bestimmt sind, dass einerseits an ihrer Position, wenn das Teil einer Belastung ausgesetzt ist, die die Nennbelastung erreicht oder übersteigt, sie einer Belastung ausgesetzt ist, die zu ihrem Bruch führt, und ihr Bruch die Integrität des Gitters im Gebrauch und damit des Teils nicht beeinträchtigt, andererseits die Bruchfestigkeit so kalibriert ist, dass sie einen höheren Wert aufweist als jenen, der es ermöglicht, einer optimalen Beanspruchung des Teils im Gebrauch standzuhalten, während er zugleich kleiner ist als jener einer maximalen Beanspruchung des Teils,
und dass das Teilstück (7) aus einem Abschnitt besteht, der von außen identifizierbar ist und der so konzipiert ist, dass er in der Lage ist, beim Bruch der mindestens einen Stange eine Verformung zu erfahren.

13. Teil aus Verbundwerkstoff nach Anspruch 12, **dadurch gekennzeichnet, dass** die Messstange (22; 23) einen im Verhältnis zu dem der anderen Stangen (20) der Gitterstruktur (2) verringerten Querschnitt aufweist.

14. Teil aus Verbundwerkstoff nach Anspruch 12, **dadurch gekennzeichnet, dass** die Messstange (22; 23) eine Sollbruchzone aufweist.

15. Teil aus Verbundwerkstoff nach Anspruch 14, **dadurch gekennzeichnet, dass** die Sollbruchzone aus einer Wicklung auf einer Spule (24) besteht, deren Festigkeit begrenzt ist.

16. Teil aus Verbundwerkstoff nach Anspruch 12, **dadurch gekennzeichnet, dass** die Messstange (22; 23) gespannte Fasern und weniger gespannte Fasern umfasst, wobei letztere in der Lage sind, nach Bruch der gespannten Fasern eine erhöhte Auslenkung des Teils zu ermöglichen.

17. Teil aus Verbundwerkstoff nach Anspruch 12, **dadurch gekennzeichnet, dass** das Teilstück des Teils, das zur Identifizierung des Bruchs bestimmt ist, eine Primärgitterstruktur umfasst, die auf Grundlage einer Verstärkungsfaser hergestellt ist, welche einen hohen Modul und eine geringe Bruchdehnung aufweist, wobei die Primärstruktur einer Sekundärstruktur zugeordnet ist, die mit der Primärstruktur zusammenwirkt oder nicht und auf Grundlage von Verstärkungsfasern hergestellt ist, die einen geringeren Modul, eine höhere Bruchdehnung und/oder eine höhere Bruchspannung aufweisen als die Fasern der Primärstruktur.

## Claims

1. Method for warning of a risk of breakage or deformation of a structural part (1) made of composite material when it is subjected to a force, wherein said part consists of a fiber-reinforced thermoplastic or thermosetting matrix (10), wherein it consists in:
- arranging said fibers into a mesh structure (2) obtained by winding fibers, whether or not impregnated with resin, onto studs or the like, so as to stretch the fibers between studs in order to form bars (21) joining or intersecting in nodes (20), wherein said bars (21) are oriented so as to be subjected to a tensile or compression stress,
- configuring at least one bar (21) of said mesh and/or integrating into said part at least one additional bar (3) created from additional nodes (30) and/or one or more nodes (201, 202, 203) of said mesh (2), the location and the resistance to breaking of which are determined so that, on the one hand, at its location, its breaking is not detrimental to the integrity in use of said mesh (2) and hence of said part, and on the other hand, that said resistance to breaking is calibrated to have a value higher than the one that allows to withstand an optimal stress in use of said part, while being smaller than that of maximum stress of said part,
- associating with said at least one bar, inside said part, a sensor means (4) designed capable of detecting its breakage,
- associating with said sensor means (4), means (5) for transmitting, outside said part, a signal relating to the breakage.

2. Method according to claim 1, wherein the strength of the at least one additional bar is calibrated by reducing its cross-section compared to that of the other bars, or by using a material that is less efficient than the one used for the other bars, or by creating on said bar an accident in shape capable of causing over-stress, or by under-dimensioning an additional node.

3. Method according to claim 1 or claim 2, wherein second sensor means for detecting the breakage of said elements associated with elements of said structure are incorporated into the mesh structure.

4. Structural part (1) made of composite material including a system for warning of a risk of breakage or deformation when it is subjected to a force, said part made of composite material consisting of a fiber-reinforced thermoplastic or thermosetting matrix (10), wherein said fibers are arranged into a mesh structure (2) obtained by winding fibers, whether or not impregnated with resin, on studs or the like, so as to cause the fibers to progress between said studs in order to form bars (21) joining or intersecting at nodes (20), said bars being oriented so as to be subjected to a tensile or compression stress, said composite part including in addition at least one additional bar (3) created from additional nodes (30) and/or one or several nodes (201, 202, 203) of said mesh, the location as well as the resistance to breaking of which are predetermined, so that, on the one hand, its resistance to breaking is calibrated so as to be smaller than the one said part must have and higher than the one that permits to withstand an optimum stress in use of said part, and on the other hand, so that its breaking is not detrimental to the integrity of said part in operation; in that said at least one bar is associated with sensor means (4) designed capable of detecting its breakage; and in that said sensor means is associated with means (5) for transmitting a signal relating to the breaking.

5. Composite material part according to claim 4, wherein the sensor means is in the form of an electrical conductor, or an optical fiber, arranged in the at least one additional bar, dedicated to measuring, designed capable of breaking simultaneously with said at least one bar.

6. Composite material part according to claim 4, wherein the sensor means is in the form of a gauge for measuring the strain due to elongation of the bar, the latter consisting of a coil or an electrical conductor, the length variation of which during the deformation has an impact on the strength of said conductor.

7. Composite material part according to any one of claims 4 to 6, wherein the means for transmitting a signal consists of a wire link passing through the matrix.

8. Composite material part according to any one of claims 4 to 6, wherein the means for transmitting a signal consists of communication electronics embedded in the matrix.

9. Composite material part according to any one of claims 4 to 6, wherein the means for transmitting a signal consists, while the matrix is transparent, of an optical transmission means.

10. Composite material part according to any one of claims 4 to 6, wherein the detection and transmission means is embedded or printed on the resin and consists of an RF antenna that can be interrogated remotely.

11. Method for warning of a risk of breakage or deformation of a structural part (1) made of composite material when it is subjected to a force, said part consisting of a fiber-reinforced thermoplastic or thermosetting matrix (10), wherein it consists in:
- arranging said fibers into a mesh structure (2) obtained by winding fibers, whether or not impregnated with resin, on studs or the like (20), so as to stretch the fibers between said studs in order to form bars (21) joining in nodes, said bars (21) being oriented so as to be subjected to a tensile or compression stress,
- designing at least one portion (7) of said part by means of at least one bar of said mesh and/or at least one additional bar (23; 23) created from additional nodes (24) and/or one or more nodes of said mesh, the location and resistance to breaking of which are determined so that, on the one hand, at its location, when the part is subjected to a force reaching or exceeding the nominal force, it is subjected to a force causing it to break, and that its breakage is not prejudicial to the integrity in use of said mesh and hence of said part, on the other hand, that said resistance to breaking is calibrated to have a value higher than the one permitting to withstand an optimum stress in use of said part, while being smaller than that of maximum stress of said part,
and in that said portion (7) of said part (1) consists of an externally identifiable portion, and which is designed capable of being submitted to a deformation during the breaking of said at least one bar.

12. Structural part made of composite material including means for warning of a risk of breakage or deformation when it is subjected to a force, said part made of composite material consisting of a fiber-reinforced thermoplastic or thermosetting matrix (10), wherein said fibers are arranged into a mesh structure (2) obtained by winding fibers, whether or not impregnated with resin, on studs or the like (20), so as to stretch the fibers between said studs (20) in order to form bars joining in nodes, said bars being oriented so as to be subjected to a tensile or compression stress,
in that said part (1) includes at least one portion (7), which incorporates at least one bar of said mesh (2) and/or at least one additional bar (22 ; 23) created from additional nodes (24) and/or one or more nodes (20) of said mesh, referred to as a measuring bar, the location and resistance to breaking of which are determined so that, on the one hand, at its location, when the part is subjected to a force reaching or exceeding the nominal force, it is subjected to a force causing its breaking, and its breaking is not detrimental to the integrity in use of said mesh and hence of said part, on the other hand, in that said resistance to breaking is calibrated to have a value higher than the one permitting to withstand an optimum stress in use of said part, while being lower than that of maximum stress of said part,
and in that said part (7) consists of an externally identifiable portion, and which is designed capable of suffering a deformation upon breaking of said at least one bar.

13. Composite material part according to claim 12, wherein the measuring bar (22; 23) has a reduced cross-section compared to those of the other bars (20) of the mesh structure (2).

14. Composite material part according to claim 12, wherein the measuring bar (22; 23) has an area of embrittlement.

15. Composite material part according to claim 14, wherein the area of embrittlement consists of a winding on a coil (24) the strength of which is limited.

16. Composite material part according to claim 12, wherein the measuring bar (22; 23) includes stretched fibers and looser fibers, the latter being capable of permitting an increased movement of the part after breaking of said stretched fibers.

17. Composite material part according to claim 12, wherein the portion of said part intended for identifying the breakage includes a primary mesh structure made of a reinforcing fiber having a high modulus and a low rate of elongation at break, said primary structure being associated with a secondary structure, whether or not concurrent with said primary structure and made of reinforcing fibers having a lower modulus, a higher elongation at break and/or a higher tensile stress than the fibers of said primary structure.
